# EUROPÄISCHE PATENTSCHRIFT

(11) **EP 1 960 156 B1**
(45) Veröffentlichungstag und Bekanntmachung des Hinweises auf die Patenterteilung: **16.09.2009**
(21) Anmeldenummer: 06828649.1
(22) Anmeldetag: 12.12.2006
(51) Int. Cl.: B23Q 17/24

(54) **VORRICHTUNG UND VERFAHREN ZUR VISUALISIERUNG VON POSITIONEN AUF EINER OBERFLÄCHE**
DEVICE AND METHOD FOR VISUALIZING POSITIONS ON A SURFACE
DISPOSITIF ET PROCEDE DE VISUALISATION DE POSITIONS SUR UNE SURFACE

(30) Priorität: 17.12.2005 DE 102005060606
(43) Veröffentlichungstag der Anmeldung: 27.08.2008
(73) Patentinhaber: MTU Aero Engines GmbH, 80995 München (DE)
(72) Erfinder: SATZGER, Wilhelm, 80804 München (DE); HESSERT, Roland, 85229 Markt Indersdorf (DE)
(86) Internationale Anmeldenummer: PCT/DE2006/002206
(87) Internationale Veröffentlichungsnummer: WO 2007/076780

(56) Entgegenhaltungen:
- DE-A1- 3 333 428
- DE-A1- 19 730 885
- US-A- 5 363 469
- US-A- 5 446 635

## Beschreibung

Die Erfindung betrifft eine Vorrichtung und ein Verfahren zur Visualisierung von Positionen auf einer Oberfläche mittels einer Markierung, die durch eine optisch erkennbare Strahlung erzeugt wird. Die vorliegende Erfindung kann besonders vorteilhaft dazu verwendet werden, Stellen oder Positionen auf Bauteiloberflächen zur Positionierung von Mess- und Fertigungsmaschinen zu markieren.

Bei der Entwicklung, Fertigung und Prüfung moderner Produkte werden hohe Anforderungen an die eingesetzten Technologien gestellt, um die gewünschte Herstellungsgenauigkeit erreichen zu können. Ein Beispiel für derartige Produkte mit höchsten Anforderungen an die Produktionsgenauigkeit sind Turbinentriebwerke. Insbesondere im Bereich der Fertigungs- und Prüftechnik kommt der Positionierbarkeit von Werkzeugen oder Messgeräten, beispielsweise Röntgen-Diffraktometern, relativ zu den Bauteilen eine entscheidende Bedeutung zu. Um eine hohe Produktqualität bei wirtschaftlichen Herstellungsverfahren zu erreichen, ist es für die Ausrichtung der Werkzeuge oder von Strahlen aussendenden Messgeräten zunächst notwendig, eine möglichst rückstandsfreie Markierung von Positionen beziehungsweise Stellen auf der Bauteiloberfläche vorzusehen. Derartige Markierungen können genutzt werden, um Werkzeuge oder nicht sichtbare Strahlen aussendende Messgeräte an den gewünschten Positionen oder Stellen der Bauteiloberflächen zu positionieren. Dies kann unter Verwendung von Bilderkennungsverfahren auch automatisiert erfolgen.

Zur Markierung von Positionen auf einer Oberfläche werden zur Ermittlung bestimmter Bauteilpositionen mit Hilfe von automatisch arbeitenden, optischen Erkennungssystemen bereits verschiedene Methoden eingesetzt.

Die einfachste Möglichkeit zur Markierung einer Position auf einer Bauteiloberfläche besteht in einer manuellen Markierung mittels Farbstiften, die einen ausreichenden Kontrast zu der zu bearbeitenden Oberfläche aufweisen und daher durch optische Aufnahmeeinrichtungen, wie Kameras, identifiziert werden können. Bei dem manuellen Aufbringen solcher Markierungen besteht jedoch das Problem, dass diese häufig nicht an genau derselben Stelle angebracht werden und auch nicht genau reproduzierbar sind, so dass eine gleichbleibende Qualität bei der Fertigung oder Überprüfung der Werkstücke nicht erreicht werden kann.

Auf dem Gebiet der Lackfehlererkennung und -beseitigung ist es beispielsweise aus der DE 197 30 885 A1 bereits bekannt, mittels einer Bildverarbeitung erkannte Oberflächenfehler zur Nachbearbeitung automatisiert zu markieren. Dazu sind über eine Rechenanlage gesteuert bewegbare und auslösbare Markierdüsen vorgesehen, um Stellen mit erkannten, relevanten Oberflächenfehlern mit wasserlöslicher Farbe zu markieren. Durch das automatisierte Auftragen der Markierungen kann im Gegensatz zu einem manuellen Markierverfahren eine hohe Genauigkeit und Reproduzierbarkeit der aufgebrachten Markierungen in ihrer Form und/oder Struktur erreicht werden. Eine direkt auf die Oberfläche aufgebrachte Markierung muss im Anschluss an die Bearbeitung und/oder Messung jedoch wieder entfernt werden. Dies ist insbesondere dann nachteilhaft, wenn an der markierten Stelle lediglich eine die Oberfläche ansonsten nicht beeinflussende Messung stattfinden soll, da dann für die Beseitigung der Markierung ein gesonderter Reinigungsschritt notwendig ist.

Bei bestimmten Anwendungen besteht darüber hinaus das Problem, dass nicht beliebige Farbstoffe verwendet werden dürfen oder können, beispielsweise weil diese nicht zugelassen sind oder die Oberflächen beschädigen. So sind im Bereich der Luftfahrttechnik bei der Fertigung moderner Turbinentriebwerke nur bestimmte Farbstoffe zugelassen.

Um eine Reinigung der Oberflächen zu vermeiden, ist es ferner bekannt, mittels einer Bilderkennung markante Bauteilmerkmale auf der Oberfläche zu extrahieren und diese zur Positionierung von Mess- und Fertigungsmaschinen zu verwenden. Ein derartiges Bilderkennungsverfahren ist jedoch aufwendig und erfordert eine hohe Rechenleistung der angeschlossenen Bildverarbeitungssysteme, damit eine Online-Verarbeitung möglich wird. Es müssen dazu aus mit einer Kamera aufgenommenen Bildern zunächst die Merkmale extrahiert werden, deren Positionen bestimmt werden soll, und anschließend eine Positionierung relativ zu diesen Merkmalen vorgenommen werden. Ein derartiges Verfahren erfordert zudem genaue Kenntnis der Lage der für die Positionsbestimmung verwendeten Bauteilmerkmale.

Dies ist nicht notwendig, wenn Lichtstrukturen mittels konventionellem Licht oder Lasern auf die Bauteiloberfläche projiziert werden, um bestimmte Positionen auf der Oberfläche zu markieren. Dies hat den Vorteil, dass die zu markierende Position beispielsweise durch ein Fadenkreuz oder eine andere geeignete Projektion unmittelbar gekennzeichnet werden kann, so dass die Einstellung eines Werkzeugs oder Messgeräts auf diese Markierung auch mittels automatischer Bilderkennungsverfahren einfach möglich ist.

Alle vorbeschriebenen Methoden zur Visualisierung von Positionen auf einer Oberfläche führen jedoch bei bestimmten Oberflächenstrukturen, beispielsweise glänzenden Flächen oder Flächen sehr großer Rauhigkeit, und bestimmten Beobachtungsrichtungen zu zum Teil erheblichen Schwierigkeiten bei der Erkennung der aufgebrachten oder projizierten Markierungen. Auch für die Positionsbestimmung ausgewertete Oberflächenmerkmale, wie beispielsweise kleine Löcher, Kanten oder dergleichen, lassen sich unter bestimmten Aufnahmebedingungen nur schwer erkennen.

Aufgabe der Erfindung ist es daher, eine Möglichkeit zur Visualisierung von Stellen oder Positionen auf Bauteiloberflächen vorzuschlagen, die eine rückstandsfreie Markierung auf beliebigen Bauteiloberflächen mit verschiedenen Rauhigkeiten ermöglicht und die Markierung mit einer optischen Aufnahmeeinrichtung unabhängig von der Beobachtungsrichtung zuverlässig erkennt. Insbesondere soll es möglich sein, auch bei extrem flachen Beobachtungsrichtungen die Markierung mittels einer Kamera einfach zu erkennen, bei denen die vorbeschriebenen Verfahren in der Praxis erhebliche Probleme haben.

Diese Aufgabe wird mit den Merkmalen der Ansprüche 1 und 9 gelöst. Durch einen insbesondere unmittelbar über der Oberfläche verfahrbar angeordneten Lichtwellenleiter ist es möglich, aus einem Lichtaustrittsbereich des Lichtwellenleiters in definierter Weise austretende Strahlung in einem gebündelten Spot zu erzeugen, so dass die gewünschte Position auf der Oberfläche beispielsweise durch die Projektion in Bildverarbeitungsverfahren einfach erkennbar ist. Aufgrund der erfindungsgemäß an der zu visualisierenden Position auftretenden hohen Intensität der optisch erkennbaren Strahlung wird eine kostengünstige und in der Praxis ständig nahezu gleich bleibende Visualisierung von Bauteilstellen zur Positionierung von Werkzeugen oder Messgeräten erreicht. Dies ermöglicht eine permanente und kontinuierliche Vermessung und eine exakte Kontrolle der Werkzeug-, Messgerät- und/oder Strahlführung im laufenden Fertigungsbetrieb.

Um eine gute Erkennbarkeit der Markierung aus verschiedenen Blickrichtungen zu erreichen, kann der Lichtaustrittsbereich des Lichtwellenleiters erfindungsgemäß derart ausgebildet werden, dass die Strahlung in verschiedene Strahlrichtungen ausgestrahlt wird. Im einfachsten Fall kann bei einem parallel zur Oberfläche geführten Lichtwellenleiter der Lichtaustrittsbereich am Ende des Lichtwellenleiters derart abgeschrägt sein, dass der Lichtaustrittsbereich zu der zu markierenden Oberfläche geneigt ist. In diesem Fall tritt die optisch erkennbare Strahlung als kleiner Streukegel aus den Lichtaustrittsbereich des Lichtwellenleiters aus. Da der Lichtwellenleiter nah an der zu markierenden Oberflächenposition angeordnet ist, ist dieser Streukegel klein genug, um die gewünschte Stelle beziehungsweise Position hinreichend genau zu markieren. Gleichzeitig tritt die Strahlung aus dem Lichtaustrittsbereich ähnlich wie bei einer punktförmigen Lichtquelle in verschiedene Raumrichtungen aus, so dass die zu markierende Position aus vielen Raumrichtungen sehr gut erkannt werden kann. Insbesondere auf der zu markierenden Oberfläche auftretende Reflexionen der optisch erkennbaren Strahlung sind aus diesem Grund aus unterschiedlichen Richtungen sehr gut zu erkennen, auch bei glatten oder rauen Oberflächenstrukturen.

Ferner ist es möglich, durch den Lichtwellenleiter eine sehr hohe Intensität der Strahlung definiert an der gewünschten Position auszustrahlen, so dass der Streukegel der optischen Strahlung mögliche Störreflexe in der Umgebung überstrahlt. Aufgrund dieses Verhaltens des Lichtwellenleiters erzeugt die erfindungsgemäße Vorrichtung eine Art selbstleuchtende Markierung, mit der die sonst nötigen komplexen und variablen Beleuchtungsbedingungen entscheiden vereinfacht werden können. Die Funktion des Lichtwellenleiters ähnelt dabei der eines Leuchtturms, der an einer definierten Raumposition ähnlich einer Punktlichtquelle optisch erkennbare Strahlung hoher Intensität in verschiedene Raumrichtungen ausstrahlt und daher von überall sehr gut gesehen werden kann.

In diesem Zusammenhang lässt sich eine Abstrahlung in viele verschiedene Raumrichtungen erfindungsgemäß besonders einfach erreichen, wenn der Lichtaustrittsbereich halbkugelförmig ausgebildet ist. Dazu kann beispielsweise das Ende des Lichtwellenleiters in Form einer Halbkugel abgeschliffen werden, aus der Lichtstrahlung über den gesamten Oberflächenbereich der Halbkugel ausgestrahlt wird.

Eine noch bessere Abstrahlwirkung in viele verschiedene Raumrichtungen ergibt sich, wenn der Lichtaustrittsbereich kugelförmig ausgebildet ist. Dazu kann beispielsweise auf das Ende des Lichtwellenleiters oder den Lichtaustrittsbereich eine die optisch erkennbare Strahlung aufnehmende und über ihre Oberfläche wieder ausstrahlende Kugel aufgesetzt werden, die eine Rundum-Strahlungswirkung erzeugt. Vorzugsweise ist dabei der Kugeldurchmesser größer als der Durchmesser des Lichtwellenleiters und/oder des Lichtaustrittsbereichs des Lichtwellenleiters. Der Lichtaustrittsbereich kann beispielsweise Einkerbungen oder dergleichen in einem bestimmten Umfangsbereich des Lichtwellenleiters aufweisen.

Erfindungsgemäß kann der oder ein Lichtaustrittsbereich von dem Ende des Lichtwellenleiters beabstandet ausgebildet sein, d.h., dass der Lichtaustritt nicht an dem Ende des Lichtwellenleiters stattfindet. Ein derartiger Lichtaustrittsbereich kann beispielsweise durch Kerben an der Oberfläche des Lichtwellenleiters erreicht werden, durch deren Formgebung die Art des Lichtaustritts erfindungsgemäß derart eingestellt werden kann, dass eine Erkennung aus möglichst vielen oder allen Raumrichtungen gleich gut möglich ist.

Außerdem können entlang des Lichtwellenleiters mehrere Lichtaustrittsbereiche vorgesehen werden, so dass gleichzeitig mehrere Positionen auf der Oberfläche durch einen Lichtwellenleiter markiert werden können.

Die gleiche Wirkung kann erreicht werden, wenn erfindungsgemäß mehrere Lichtwellenleiter eingesetzt werden, die vorzugsweise gesondert positionierbar sind. Natürlich ist es erfindungsgemäß auch möglich, mehrere Lichtwellenleiter durch eine gemeinsame Bewegungseinheit gemeinsam zu verfahren.

Gemäß einer bevorzugten Ausführungsform der Erfindung ist der Lichtwellenleiter aus einem amorphen Material aufgebaut. Dies ist insbesondere ein geeigneter Kunststoff. Durch die Verwendung eines amorphen Lichtwellenleiters kann die Vorrichtung besonders gut bei der Röntgen-Diffraktometerie eingesetzt werden, da der amorphe Lichtwellenleiter die einfallenden Röntgenstrahlen nicht wesentlich schwächt und den Untergrund der rückgestreuten Strahlung nicht merklich erhöht.

Gemäß einer bevorzugten Ausführungsform der Erfindung erzeugt die an den Lichtwellenleiter angekoppelte Strahlungsquelle sichtbares Licht, weil das sichtbare Licht auf der Bauteiloberfläche einfach ohne weitere Hilfsmittel zu erkennen ist und mittels Standard-CCD-Kameras aufgenommen werden kann. Natürlich ist die vorliegende Erfindung nicht auf die Verwendung von sichtbarem Licht beschränkt, sondern kann als optisch erkennbare Strahlung jegliche Strahlung verwenden, die mittels geeigneter Aufnahmeeinrichtungen erkannt werden kann. Als Beispiel sind Wellenlängen aus dem Infrarotbereich zu nennen. Dies könnte für Infrarotkameras nützlich sein, die in ihren Bildern eindeutig bestimmte Punkte als Bezugspunkte festhalten sollen.

Bei der Verwendung von mehreren Lichtwellenleitern und/oder mehreren Lichtaustrittsbereichen ist es auch möglich, verschiedene Strahlungsquellen elektromagnetischer Strahlung zu verwenden, um die einzelnen Austrittsbereiche des oder der Lichtwellenleiter(s) von vorneherein unterschiedlich zu markieren. Auch bei Verwendung eines Lichtwellenleiters ist dies möglich, da durch die Ausbildung der Lichtaustrittsbereiche gezielt Licht aus einem bestimmten Teil des Lichtwellenleiters ausgekoppelt werden kann.

Ferner weist die Vorrichtung erfindungsgemäß eine Bewegungseinheit mit einer Steuerung zur Positionierung des und/oder der Lichtwellenleiter(s), eine auf den Lichtaustrittsbereich des Lichtwellenleiters ausgerichtete Aufnahmeeinrichtung mit einer angeschlossenen Bildauswerteeinheit und eine Einrichtung zur Darstellung der Wirkrichtung eines Arbeitsmittels auf, wobei die Einrichtung insbesondere zusammen mit dem Arbeitsmittel relativ zu dem Lichtwellenleiter positionierbar ist. Die letztgenannte Einrichtung zur Darstellung der Wirkrichtung eines Arbeitsmittels kann insbesondere vorsehen, dass zwei Lichtquellen und ein Werkzeug oder Arbeitsmittel derart einrichtbar sind, dass ein erster Strahl der ersten Lichtquelle und ein zweiter Strahl der zweiten Lichtquelle jeweils eine flächige Aufweitung aufweisen und sich in Wirkrichtung des Arbeitsmittels schneiden. Eine derartige Vorrichtung ist in der deutschen Patentanmeldung DE 10 2004 050428 der Anmelderin beschrieben.

Die vorgenannten Einrichtungen und/oder Steuerungen können vorzugsweise zur Durchführung des nachfolgend beschriebenen, erfindungsgemäßen Verfahrens eingerichtet sein.

Bei dem vorgeschlagenen Verfahren zur Visualisierung von Positionen auf einer Oberfläche mittels einer Markierung, die durch eine optisch erkennbare Strahlung erzeugt wird, wird Strahlung an der gewünschten Position der Oberfläche in verschiedene Raumrichtungen ausgestrahlt. Durch die Ausstrahlung der optisch erkennbaren Strahlung in verschiedene Raumrichtungen kann eine gute Erkennbarkeit der Positionen auf der zu markierenden Oberfläche erreicht werden.

Dies wird erfindungsgemäß dadurch erreicht, dass die Strahlung durch einen Lichtwellenleiter ausgestrahlt wird, dessen Lichtaustrittsbereich relativ zu der Oberfläche positionierbar ist. Durch einen derartigen Lichtwellenleiter kann die Strahlung mit hoher Intensität gebündelt an einer einstellbaren gewünschten Position ausgestrahlt werden, so dass an dem Lichtaustrittsbereich des Lichtwellenleiters eine Art selbstleuchtende Markierung entsteht.

Erfindungsgemäß kann die Strahlung durch mehrere Lichtwellenleiter und/oder mehrere Austrittsbereiche eines Lichtwellenleiters ausgestrahlt werden, so dass mehrere Oberflächenstellen gleichzeitig gekennzeichnet werden können. Um eine Identifizierung der einzelnen Markierungen zu erreichen, kann insbesondere vorgesehen sein, dass ein Lichtwellenleiter und/oder ein Lichtaustrittsbereich gesondert schaltbar ist und/oder für verschiedene'Lichtwellenleiter und/oder verschiedene Austrittsbereiche eine unterschiedliche Strahlung verwendet wird. Dazu können bspw. mehrere Strahlungsquellen an einem Lichtwellenleiter angeordnet werden, deren Strahlung in bestimmte Teile des Lichtwellenleiters eingespeist wird. Ferner können Strahlungsquellen durch Ein- und Ausschalten in bestimmten zeitlichen Sequenzen an- und abgeschaltet werden, so dass einzelne Lichtwellenleiter und/oder Austrittsbereiche durch die Art der Signalisierung unterschieden werden können.

Durch eine Bewegung des Lichtaustrittsbereich des Lichtwellenleiters relativ zu der Oberfläche ist es erfindungsgemäß ferner möglich, eine Bahn auf der Oberfläche vorzugeben bzw. zu markieren. Diese Bewegung kann gezielt durch eine entsprechende Steuerung ausgeführt werden. Auf diese Weise können mehrere verschiedene Oberflächenstelle durch eine Wirklinie erfasst und eine komplette Bahn vorgegeben werden, die zu bearbeiten und/oder zu vermessen ist. Bei der Röntgen-Diffraktometerie oder in anderen Anwendungsfällen können dadurch Oszillationen um die zu vermessende Stelle gesteuert werden, die bei der Untersuchung von nicht idealen Werkstoffgefügen, beispielsweise Grobkorn, notwendig sind.

Die Position des Lichtaustrittsbereichs wird durch eine Aufnahmeeinrichtung, insbesondere eine Kamera für sichtbares Licht und/oder infrarote Strahlung, bestimmt. Dabei kann durch die erfindungsgemäß hohe Intensität der Strahlung im Lichtaustrittsbereich und eine Schwellenwertbildung mit der Bildverarbeitung einfach dafür gesorgt werden, dass nur der aus dem Lichtaustrittsbereich des Lichtwellenleiters austretende Lichtkegel noch auf dem Bild erkennbar ist und dessen Position daher einfach gefunden werden kann. Zur Bestimmung der Position relativ zu der Bauteiloberfläche kann bei identischer Position der Aufnahmeeinrichtung ferner die Oberfläche ohne die aus dem Lichtwellenleiter austretende Strahlung aufgenommen werden, so dass aus Merkmalen der Bauteiloberfläche eine Positionierung abgeleitet werden kann. Auf diese Weise kann durch einfaches Abziehen der beiden Bilder voneinander die Position der Markierung beispielsweise zur Positionierung von Mess- und Fertigungsmaschinen erhalten werden.

Die Positionen des Lichtaustrittsbereichs und die Wirkrichtung eines Arbeitsmittels auf der Oberfläche werden durch eine Aufnahmerichtung erfasst und die Wirkrichtung des Arbeitsmittels mit der Position des Lichtaustrittsbereichs in Übereinstimmung gebracht. Hierfür kann die Steuerung einer Bewegungseinrichtung der erfindungsgemäßen Vorrichtung verwendet werden. Unter Arbeitsmittel ist sowohl ein bearbeitendes Werkzeug als auch ein Messgerät zu verstehen, das beispielsweise nicht sichtbare Strahlung aussendet, wie ein Röntgen-Diffraktometer.

Weitere Merkmale, Vorteile und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

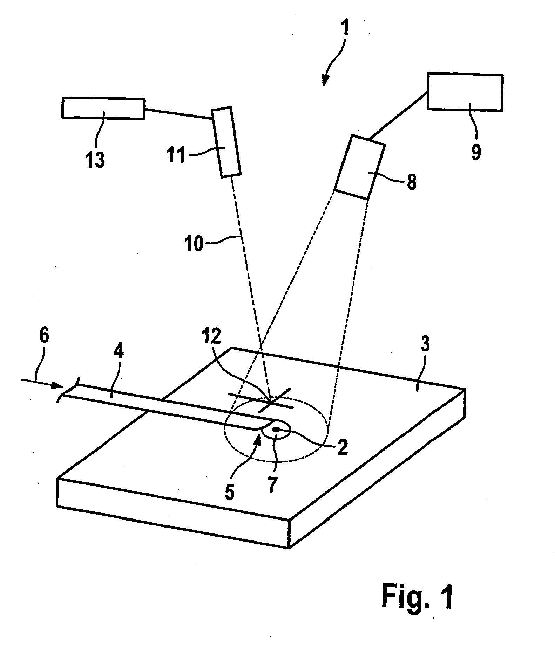

Die einzige Fig. 1 zeigt in einer dreidimensionalen Ansicht schematisch eine Ausgestaltung einer erfindungsgemäßen Vorrichtung.

Die erfindungsgemäße Vorrichtung 1 zur Visualisierung von Positionen 2 auf der Oberfläche 3 eines zu bearbeitenden bzw. zu vermessenden Gegenstands weist einen Lichtwellenleiter 4 auf, der mittels einer nicht dargestellten Bewegungseinheit mit einer Steuerung relativ zu der Oberfläche 3 bewegbar ist. Dabei ist der Lichtwellenleiter 4 parallel zu der Oberfläche 3 angeordnet, die beispielsweise eine Bauteiloberfläche eines Turbinentriebwerks oder dergleichen sein kann. An dem freien Ende des Lichtwellenleiters 4 über der Oberfläche 3 ist ein abgeschrägter, auf die Oberfläche 3 ausgerichteter Lichtaustrittsbereich 5 vorgesehen. An dem entgegengesetzten Ende ist der Lichtwellenleiter 4 an eine durch einen Pfeil symbolisierte Strahlungsquelle 6 angeschlossen, die sichtbare und/oder infrarote, optisch erkennbare Strahlung in den Lichtwellenleiter 4 einkoppelt. Der Lichtwellenleiter 4 ist derart über der Position 2 auf der Oberfläche 3 positioniert, dass ein aus dem Lichtaustrittsbereich 5 des Lichtwellenleiters 4 austretender Lichtaustrittskegel 7 der optisch erkennbaren Strahlung im Bereich der Position 2 auf die Oberfläche 3 fällt.

Die Position 2 stellt dabei eine zu behandelnde oder zu vermessende Stelle auf der Bauteiloberfläche 3 dar, die im Zentrum des Lichtaustrittskegels 7 angeordnet ist. Der Lichtaustrittskegel 7 wird derart gebildet, dass aus dem Lichtwellenleiter 4, der quasi eine Punktlichtquelle darstellt, Strahlung in verschiedenen Raumrichtungen möglichst gleichmäßig ausgestrahlt wirkt, so dass die ausgestrahlte Strahlung beispielsweise als Lichtpunkt möglichst von allen oder vielen Raumrichtungen aus gleich gut zu erkennen ist.

Anstelle des dargestellten, am Ende des Lichtwellenleiters 4 ausgebildeten und abgeschrägten Lichtaustrittsbereichs 5 des Lichtwellenleiters 4 könnte als Lichtaustrittsbereich auch eine Kugel vorgesehen werden, die am Ende des Lichtwellenleiters angeordnet ist und eine Abstrahlung der optisch erkennbaren Strahlung in nahezu jede Raumrichtung ermöglicht. Ferner können Lichtaustrittsbereiche im Verlauf des Lichtwellenleiters beabstandet von dessen Ende vorgesehen werden.

Um den Lichtwellenleiter 4 an der Position 2 der Oberfläche 3 derart anzuordnen, dass der Lichtkegel 7 an der Position 2 liegt, ist eine nicht dargestellte Bewegungseinheit des Lichtwellenleiters 4 mit einer Steuerung verbunden, der bestimmte Positionen des Lichtwellenleiters 4 vorgegeben werden können. Zur Positionsbestimmung ist als Aufnahmeeinrichtung 8 eine Kamera bzw. Kameraeinheit vorgesehen, die den Lichtaustrittskegel 7 erfasst. Die Kamera 8 ist an eine Bildauswerte- bzw. Bildverarbeitungseinheit 9 angeschlossen, die das Kamerabild auswertet.

Um die Position des Lichtaustrittskegels 7 relativ zu nicht näher dargestellten Merkmalen auf der Oberfläche 3 bestimmen zu können, wird vorgeschlagen, dass die Kamera 8 in unveränderter Position eine Aufnahme mit Lichtaustrittskegel 7, d.h. bei eingeschalteter Strahlungsquelle 6, und ein Bild bei ausgeschalteter Strahlungsquelle 6 ohne den Lichtaustrittskegel 7 aufnimmt, in dem dann die in der Zeichnung nicht dargestellten Merkmale auf der Oberfläche 3 detektiert werden können. Durch Subtraktion der beiden aufgenommenen Bilder ist dann die Position des Lichtaustrittskegels 7 genau bekannt. Gegebenenfalls kann dann von der Bildauswerte- bzw. Bildverarbeitungseinheit auch ein Befehl an die Steuerung der Bewegungseinheit des Lichtwellenleiters 4 ausgegeben werden, um den Lichtaustrittskegel 7 in Übereinstimmung mit der gewünschten Position 2 auf der Oberfläche 3 zu bringen.

Die auf diese Weise visualisierte Markierung der Position 2 auf der Oberfläche 3 kann erfindungsgemäß verwendet werden, um die Wirkrichtung 10 eines Arbeitsmittels 11, wie eines Werkzeugs, eines Messgeräts oder einer Strahlungsquelle, auf die Position 2 der Oberfläche 3 auszurichten. Die Wirkrichtung 10 des Werkzeugs 11 kann beispielsweise in Form eines Kreuzes 12 auf der Oberfläche 3 dargestellt werden, dessen Bestandteile durch flächige Aufweitung der Lichtstrahlen zweier Strahlungsquellen gebildet ist und derart einjustiert wurde, dass der Schnittpunkt des Kreuzes 12 mit der Wirkrichtung 10 des Werkzeugs zusammenfällt. Vorzugsweise ist eine derartige Vorrichtung zur Erzeugung der Lichtebenen für das Kreuz 12 so an dem Werkzeug 11 montiert, dass eine Bewegung des Werkzeug 11 durch eine Verstelleinheit 13 gleichzeitig auf das Werkzeug 11 und das Kreuz 12 einwirkt.

Das Kreuz 12 kann dann durch die Kamera 8 mit erfasst und deren Abstand zu der durch den Lichtaustrittskegel 7 markierten Position 2 auf der Oberfläche 3 mittels der Bildverarbeitungseinheit 9 ermittelt werden. Solange das Kreuz 12 und der Lichtkegel 7 im Blickfeld der Kamera 8 sind, kann so durch die auf die Verstelleinheit 13 einwirkende Bildverarbeitungseinheit 9 die Wirkrichtung 10 an die zu behandelnde Stelle bzw. Position 2 der Oberfläche 3 geführt werden.

Damit eignen sich die erfindungsgemäße Vorrichtung und das erfindungsgemäßen Verfahren zur Visualisierung von Positionen 2 auf einer Oberfläche 3 nicht nur zur Markierung einer bestimmten Position 2 auf einer Oberfläche 3, sondern auch zum Nachführen der Wirkrichtung 10 eines Werkzeugs 11.

Da der Lichtwellenleiter 4, und damit der Lichtaustrittskegel 7, durch eine nicht dargestellte Bewegungseinheit relativ zu der Oberfläche 3 bewegt werden kann, können damit auch Bahnen auf der Oberfläche 3 vorgegeben werden, auf denen die Wirkrichtung 10 des Werkzeugs 11 nachgeführt wird. Bei einem Röntgen-Diffraktometer ist es so beispielsweise möglich, Oszillationen um die zu vermessende Position 2 gesteuert zu erzeugen, die bei der Untersuchung von nicht idealen Werkstoffgefügen, beispielsweise Grobkorn, notwendig sind.

Im Übrigen ermöglicht die vorliegende Erfindung eine kostengünstige und aufgrund der leuchtturmartigen Funktionsweise des Lichtwellenleiters 4 praktisch konstant gleichbleibende Visualisierung von Positionen 2 auf einer Oberfläche 3, die insbesondere zur Positionierung von Werkzeugen 11, nicht sichtbaren Strahlungen von Messgeräten, beispielsweise Röntgenstrahlen, oder dgl. verwendet werden kann.

## Patentansprüche

1. Vorrichtung zur Visualisierung von Positionen (2) auf einer Oberfläche (3) mittels einer Markierung, die durch eine optisch erkennbare Strahlung erzeugt wird, **dadurch gekennzeichnet, dass** die Vorrichtung (1) einen Lichtwellenleiter (4) aufweist, der an eine Strahlungsquelle (6) angekoppelt ist und dessen Lichtaustrittsbereich (5) an einer gewünschten Position (2) der Oberfläche (3) positionierbar ist, und dass eine Bewegungseinheit mit einer Steuerung zur Positionierung des Lichtwellenleiters (4), eine auf den Lichtaustrittsbereich (5) des Lichtwellenleiters (4) ausgerichtete Aufnahmeeinrichtung (8) mit einer angeschlossenen Bildauswerteeinheit (9) und eine Einrichtung zur Darstellung der Wirkrichtung (10) eines Arbeitsmittels (11) vorgesehen ist, welche relativ zu dem Lichtwellenleiter (4) positionierbar ist.

2. Vorrichtung nach Anspruch 1, **dadurch gekennzeichnet, dass** der Lichtaustrittsbereich (5) des Lichtwellenleiters (4) derart ausgebildet ist, dass die Strahlung in verschiedene Raumrichtungen ausgestrahlt wird.

3. Vorrichtung nach Anspruch 2, **dadurch gekennzeichnet, dass** der Lichtaustrittsbereich (5) halbkugelförmig ausgebildet ist.

4. Vorrichtung nach Anspruch 2, **dadurch gekennzeichnet, dass** der Lichtaustrittebereich (5) kugelförmig ausgebildet ist, wobei der Kugeldurchmesser größer ist als der Durchmesser des Lichtwellenleiters (4) und/oder des Lichtaustrittsbereichs (5).

5. Vorrichtung nach einem der vorhergehenden Ansprüche, **dadurch gekennzeichnet, dass** entlang des Lichtwellenleiters (4) mehrere Lichtaustrittsbereiche (5) vorgesehen sind.

6. Vorrichtung nach einem der vorhergehenden Ansprüche, **dadurch gekennzeichnet, dass** mehrere Lichtwellenleiter (4) vorgesehen sind.

7. Vorrichtung nach einem der vorhergehenden Ansprüche, **dadurch gekennzeichnet, dass** der Lichtwellenleiter (4) aus einem amorphen Material aufgebaut ist.

8. Vorrichtung nach einem der vorhergehenden Ansprüche, **dadurch gekennzeichnet, dass** die an den Lichtwellenleiter (4) angekoppelte Strahlungsquelle (6) sichtbares und/oder infrarotes Licht erzeugt.

9. Verfahren zur Visualisierung von Positionen (2) auf einer Oberfläche (3) mittels einer Markierung, die durch eine optisch erkennbare Strahlung erzeugt wird, **dadurch gekennzeichnet, dass** die Strahlung durch einen Lichtwellenleiter (4) ausgestrahlt wird, dessen Lichtaustrittsbereich (5) relativ zu der Oberfläche (3) positionierbar ist, dass eine Aufnahmeeinrichtung (8) mit der Position des Lichtaustrittsbereichs (5) in Übereinstimmung gebracht wird und dass die Wirkrichtung (10) eines Arbeitsmittels (11) mit der Position (2) des Lichtaustrittbereichs (5) in Übereinstimmung gebracht wird.

10. Verfahren nach Anspruch 9, **dadurch gekennzeichnet, dass** die Strahlung durch mehrere Lichtwellenleiter (4) und/oder mehrere Austrittsbereiche (5) eines Lichtwellenleiters (4) ausgestrahlt wird, wobei ein Lichtwellenleiter (4) und/oder ein Austrittsbereich (5) gesondert schaltbar ist und/oder für verschiedene Lichtwellenleiter (4) und/oder verschiedene Austrittsbereiche (5) eine unterschiedliche Strahlung verwendet wird.

11. Verfahren nach Anspruch 9 oder 10, **dadurch gekennzeichnet, dass** durch eine Bewegung des Liohtaustrittsbereichs (5) relativ zu der Oberfläche (3) eine Bahn auf der Oberfläche (3) vorgegeben wird.

## Claims

1. Device for visualising positions (2) on a surface (3) by means of a marking produced by optically detectable radiation, **characterised in that** the device (1) comprises an optical wave guide (4) which is coupled to a radiation source (6) and the optical outlet region (5) of which can be placed in a desired position (2) of the surface (3), and **in that** a movement unit with a controller for positioning the optical wave guide (4), a recording device (8) aligned towards the optical outlet region (5) of the optical wave guide (4) and including a connected image evaluation unit (9) and a device for representing the direction of action (10) of an operating means (11), which can be positioned relative to the optical wave guide (4), are provided.

2. Device according to claim 1, **characterised in that** the optical outlet region (5) of the optical wave guide (4) is designed such that the radiation is emitted in various directions in space.

3. Device according to claim 2, **characterised in that** the optical outlet region (5) is hemispherical.

4. Device according to claim 2, **characterised in that** the optical outlet region (5) is spherical, the diameter of the sphere being greater than the diameter of the optical wave guide (4) and/or of the optical outlet region (5).

5. Device according to any of the preceding claims, **characterised in that** a plurality of optical outlet regions (5) are provided along the optical wave guide (4).

6. Device according to any of the preceding claims, **characterised in that** a plurality of optical wave guides (4) is provided.

7. Device according to any of the preceding claims, **characterised in that** the optical wave guide (4) is assembled from an amorphous material.

8. Device according to any of the preceding claims, **characterised in that** the radiation source (6) coupled to the optical wave guide (4) generates visible and/or infrared light.

9. Method for visualising positions (2) on a surface (3) by means of a marking produced by optically detectable radiation, **characterised in that** the radiation is emitted by an optical wave guide (4) the optical outlet region (5) can be positioned relative to the surface (3), **in that** a recording device (8) is brought into alignment with the position of the optical outlet region (5), and **in that** the direction of action (10) of an operating means (10) is brought into alignment with the position (2) of the optical outlet region (5).

10. Method according to claim 9, **characterised in that** the radiation is emitted by a plurality of optical wave guides (4) and/or by a plurality of optical outlet regions (5) of an optical wave guide (4), wherein one optical wave guide (4) and/or one outlet region (5) is/are switchable individually and/or a different radiation is used for different optical wave guides (4) and/or for different outlet regions (5).

11. Method according to claim 9 or 10, **characterised in that** a path on the surface (3) is preset by a movement of the optical outlet region (5) relative to the surface (3).

## Revendications

1. Dispositif de visualisation de positions (2) sur une surface (3) au moyen d'un marquage qui est généré par un rayonnement optiquement reconnaissable, **caractérisé en ce que** le dispositif (1) présente un guide d'ondes optiques (4) qui est couplé avec une source de rayonnement (6) et dont la zone de sortie de lumière (5) peut être positionnée dans une position souhaitée (2) de la surface (3), et **en ce qu'**une unité de déplacement avec un dispositif de commande pour le positionnement du guide d'ondes optiques (4), un dispositif d'enregistrement (8) orienté vers la zone de sortie de lumière (5) du guide d'ondes optiques (4) avec une unité d'évaluation d'image (9) connectée, et un dispositif pour la représentation de la direction active (10) d'un moyen opérationnel (11) sont prévus et peuvent être positionnés par rapport au guide d'ondes optiques (4).

2. Dispositif selon la revendication 1, **caractérisé en ce que** la zone de sortie de lumière (5) du guide d'ondes optiques (4) est réalisée de telle sorte que le rayonnement est émis dans différentes directions spatiales.

3. Dispositif selon la revendication 2, **caractérisé en ce que** la zone de sortie de lumière (5) est réalisée en forme de demi-sphère.

4. Dispositif selon la revendication 2, **caractérisé en ce que** la zone de sortie de lumière (5) est réalisée en forme de sphère, dans lequel le diamètre de sphère est supérieur au diamètre du guide d'ondes optiques (4) et/ou de la zone de sortie de lumière (5).

5. Dispositif selon l'une quelconque des revendications précédentes, **caractérisé en ce que** le long du guide d'ondes optiques (4), plusieurs zones de sortie de lumière (5) sont prévues.

6. Dispositif selon l'une quelconque des revendications précédentes, **caractérisé en ce que** plusieurs guides d'ondes (4) sont prévus.

7. Dispositif selon l'une quelconque des revendications précédentes, **caractérisé en ce que** le guide d'ondes optiques (4) se compose d'un matériau amorphe.

8. Dispositif selon l'une quelconque des revendications précédentes, **caractérisé en ce que** la source de rayonnement (6) couplée avec le guide d'ondes optiques (4) génère de la lumière visible et/ou infrarouge.

9. Procédé de visualisation de positions (2) sur une surface (3) au moyen d'un marquage qui est généré par un rayonnement optiquement reconnaissable, **caractérisé en ce que** le rayonnement est émis par un guide d'ondes optiques (4) dont la zone de sortie de lumière (5) peut être positionnée par rapport à la surface (3), **en ce qu'**un dispositif d'enregistrement (8) est mis en correspondance avec la position de la zone de sortie de lumière (5), et **en ce que** la direction active (10) d'un moyen opérationnel (11) est mise en correspondance avec la position (2) de la zone de sortie de lumière (5).

10. Procédé selon la revendication 9, **caractérisé en ce que** le rayonnement est émis par plusieurs guides d'ondes (4) et/ou plusieurs zones de sortie (5) d'un guide d'ondes optiques (4), dans lequel un guide d'ondes optiques (4) et/ou une zone de sortie (5) peut être connecté(e) séparément et/ou un rayonnement différent est utilisé pour différents guides d'ondes (4) et/ou différentes zones de sortie (5).

11. Procédé selon la revendication 9 ou 10, **caractérisé en ce qu'**un déplacement de la zone de sortie de lumière (5) par rapport à la surface (3) spécifie une trajectoire sur la surface (3).
